# EUROPEAN PATENT SPECIFICATION

(11) **EP 4 082 698 B1**
(45) Date of publication and mention of the grant of the patent: **14.10.2026**
(21) Application number: 22165437.9
(22) Date of filing: 30.03.2022
(51) Int. Cl.: B23B 27/00, B23B 27/16, B23B 27/04, B23B 29/04

(54) **CUTTING INSERT AND CUTTING TOOL**
SCHNEIDEINSATZ UND SCHNEIDWERKZEUG
INSERT DE COUPE ET OUTIL DE COUPE

(30) Priority: 28.04.2021 JP 2021076442
(43) Date of publication of application: 02.11.2022
(73) Proprietor: Tungaloy Corporation, Iwaki-shi, Fukushima 970-1144 (JP)
(72) Inventor: KONDOU, Yuma, Fukushima (JP); OTSUKA, Jun, Fukushima (JP); MOCHIZUKI, Katsura, Fukushima (JP)
(74) Representative: Vossius & Partner Patentanwälte Rechtsanwälte mbB

(56) References cited:
- EP-B1- 2 629 914
- US-A1- 2019 091 772
- US-B2- 7 597 508

## Description

### Background

### Field

The present invention relates to a cutting insert and a cutting tool.

### Description of Related Art

In a cutting tool for turning a work material and grooving the inner surface of the work material, a tool body typically holds a cutting insert at the distal end of the cutting tool. As such a cutting tool, Japanese Translation of PCT Application No. 2017-510469 discloses a cutting insert having four cutting parts with wavy irregularities formed on outer circumferential surfaces forming the four cutting parts. Such a cutting insert is advantageous in that the four cutting parts are usable.

EP 2 629 914 B1 & US 2019/091772 A1 disclose prior art cutting inserts.

### Summary

In the cutting tool disclosed in said PCT application number 2017-510469, however, the tool body in contact with the cutting parts of the cutting insert holds the cutting insert. Thus, if one of the cutting parts is broken, the tool body may fail to sufficiently hold the cutting insert, so that the cutting insert may become unusable before all the cutting parts are used.

The present invention has been devised in view of the problem. An object of the present invention is to provide a cutting insert and a cutting tool such that a tool body can sufficiently hold the cutting insert even if one of cutting parts is broken.

A cutting insert according to the invention is claimed in claim 1.

Accordingly, the tool body can come into contact with contact portions other than the cutting parts of the cutting insert and hold the cutting insert, so that the tool body can sufficiently hold the cutting insert even if one of the cutting parts is broken.

The first outer circumferential surface part and the second outer circumferential surface part may be substantially V-shaped in the side view of the side surfaces from the axial direction of the fixing hole.

The first outer circumferential surface part and the second outer circumferential surface part may have an angle of aperture of 130 degrees or larger and 179 degrees or smaller.

**The** fixing hole may have a hole diameter that is 30% or less of the diameter of the circumcircle of the cutting insert.

The cutting insert may have a length that is 70% or less of the diameter of the circumcircle of the cutting insert in a direction connecting the lip of the first cutting part and the lip of the fourth cutting part, and the cutting insert may have a length that is 95% or less of the diameter of the circumcircle of the cutting insert in a direction connecting the lip of the first cutting part and the lip of the second cutting part.

The cutting part may have a clearance angle of 10 degrees or greater.

The side may have first parts including side surfaces of the four cutting parts and second parts that are located near the fixing hole on the first parts so as to protrude higher than the first parts, and the second part may have an outer face forming a second flank, the second flank having a clearance angle of 5 degrees or greater.

A cutting tool according to the invention includes the cutting insert and a tool body to which the cutting insert is fixed.

The tool body may include a first holding part that comes into contact with two points on one of the first outer circumferential surface part and the second outer circumferential surface part, and a second holding part that comes into contact with a point on the other of the first outer circumferential surface part and the second outer circumferential surface part.

The first holding part may have an arc face protruding toward the second holding part.

The second holding part may have an arc face protruding toward the first holding part.

The tool body may have a screw hole, the cutting insert may be fixed to the tool body with a screw inserted into the fixing hole and the screw hole, and in a plan view of the distal end of the cutting tool from the axial direction of the tool body, the center of the screw hole of the tool body may be shifted from the center of the fixing hole of the cutting insert, the cutting insert may be fixable to the tool body with the screw, and the center of the screw hole of the tool body may be shifted from the center of the fixing hole of the cutting insert in a direction tilted at 0 degree with respect to a vertically downward direction or at an angle of 45 degrees or less toward the center of the tool body in a state in which the lip of the cutting part used for the cutting insert and the center of the fixing hole are disposed on a horizontal line.

In a plan view of the distal end of the cutting tool from the axial direction of the tool body, the cutting insert may be fixable to the tool body such that a virtual straight line connecting the lips of two of the four cutting parts is a horizontal line, the two cutting parts being diagonally opposite to each other.

### Brief Description of Drawings

FIG. 1 is a perspective view illustrating an example of a cutting tool according to the present embodiment;
FIG. 2 is an enlarged view of the distal end part of the cutting tool;
FIG. 3 is a perspective view of a cutting insert;
FIG. 4 is a side view illustrating the cutting insert from the axial direction of the fixing hole;
FIG. 5 is a front view of a first outer circumferential surface part or a second surface outer part on the cutting insert;
FIG. 6 is a front view of a third outer circumferential surface part or a fourth outer circumferential surface part on the cutting insert;
FIG. 7 is a side view illustrating the cutting insert from the axial direction of the fixing hole to describe distances L3 and L4;
FIG. 8 is a side view illustrating the cutting insert from the axial direction of the fixing hole to describe angles α2 and α3;
FIG. 9 is a perspective view illustrating the fixing part of a tool body;
FIG. 10 is a front view of the tool body;
FIG. 11 is a front view of the cutting tool with the cutting insert attached to the tool body; and
FIG. 12 is a front view of the cutting tool being used.

### Detailed Description

A preferred embodiment of the present invention will be described below with reference to the accompanying drawings.

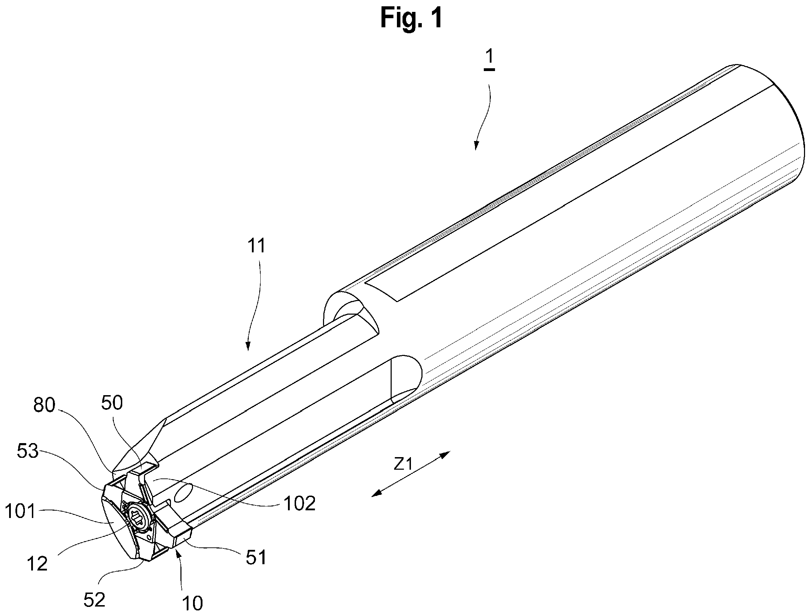

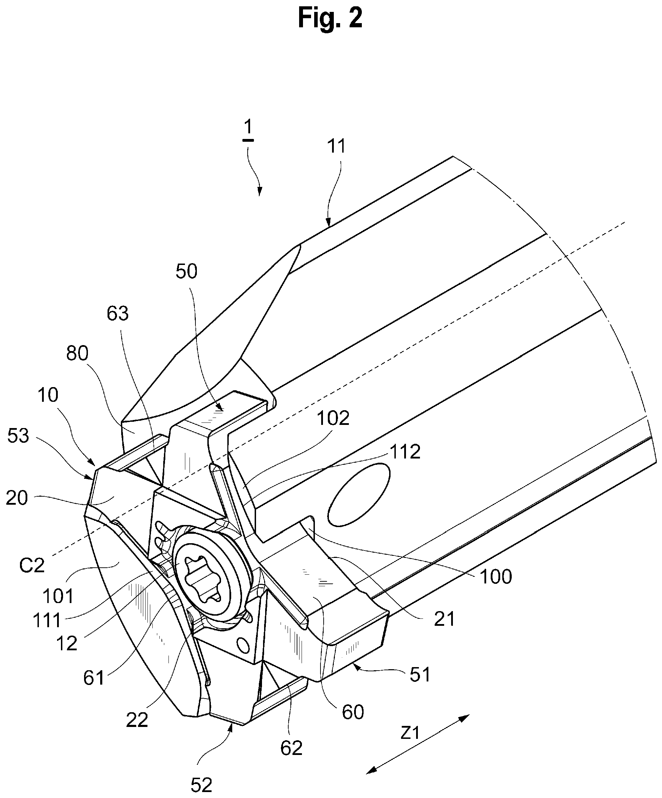

FIG. 1 is a perspective view illustrating an example of a cutting tool 1 according to the present embodiment. FIG. 2 is an enlarged view of the distal end part of the cutting tool 1. The cutting tool 1 is, for example, a tuning tool with a replaceable cutting edge. The cutting tool 1 includes a cutting insert 10 and a tool body (holder) 11 to which the cutting insert 10 is fixed. The cutting insert 10 is fixed to the tool body 11 with a screw 12.

### Cutting Insert

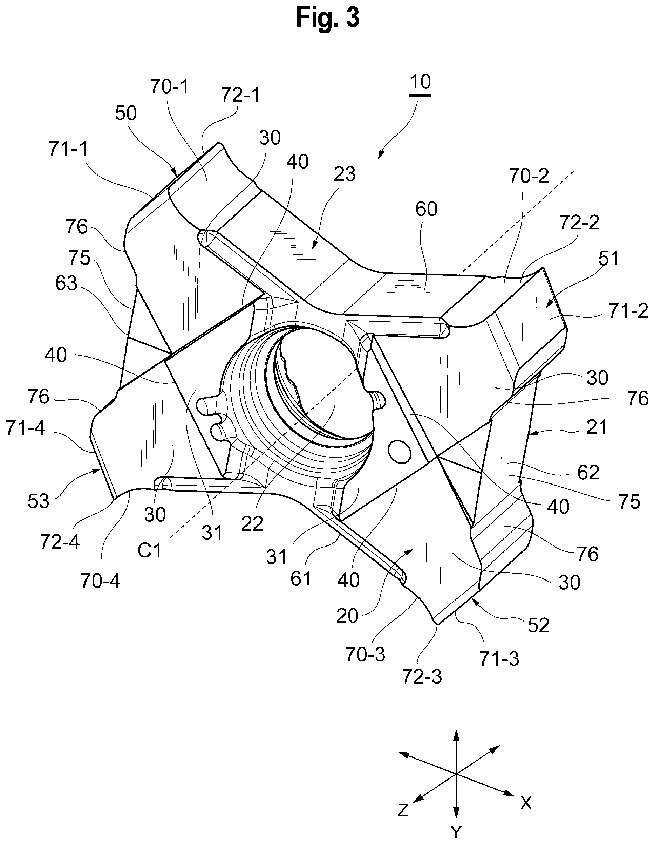

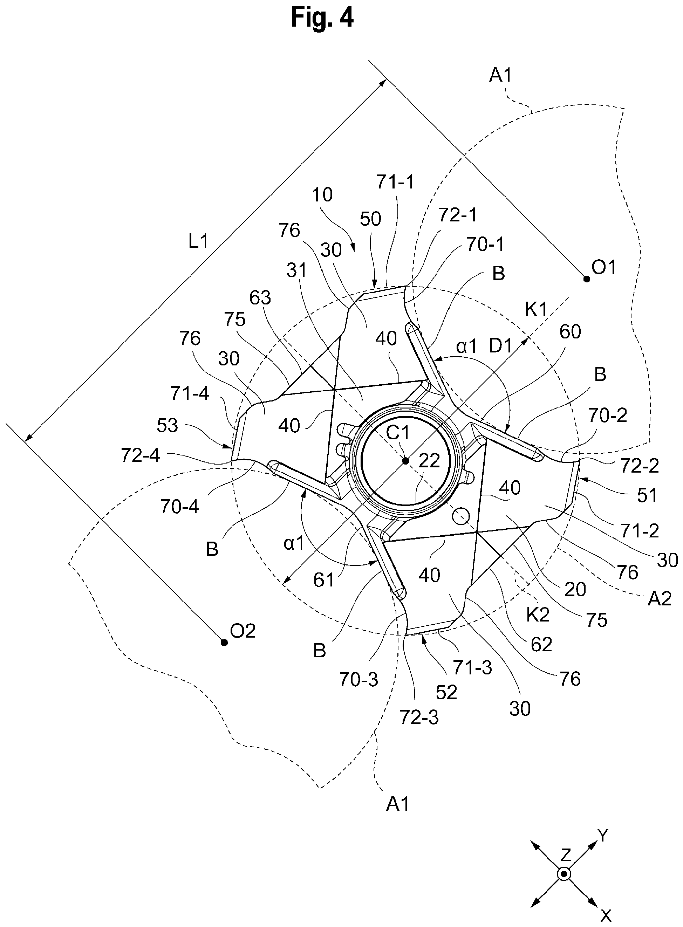

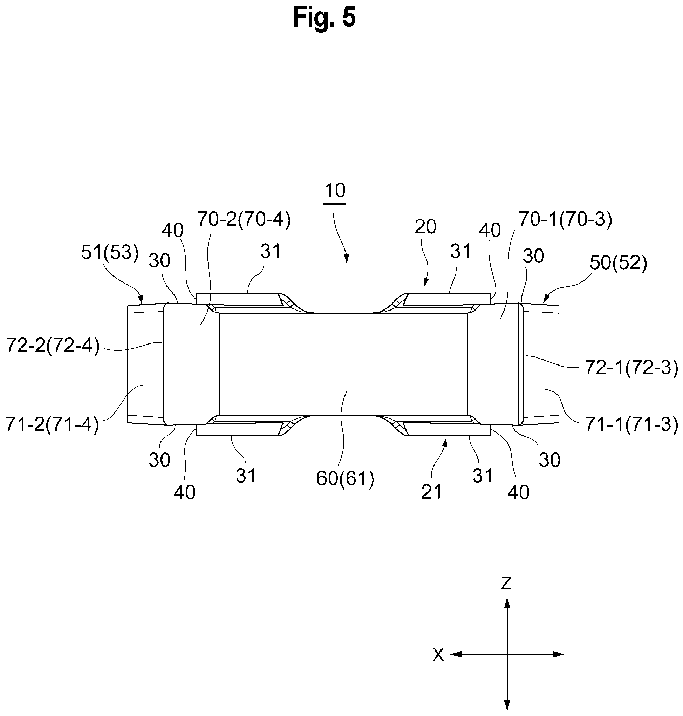

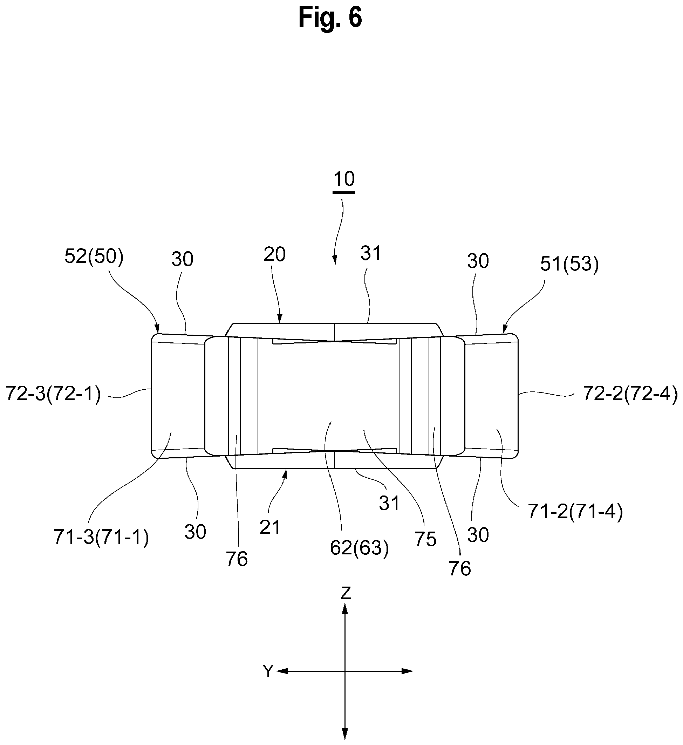

FIG. 3 is a perspective view of the cutting insert 10. FIG. 4 is a side view illustrating the cutting insert 10 from the axial direction of the fixing hole. FIG. 5 is a front view of a first outer circumferential surface part or a second surface outer part on the cutting insert 10. FIG. 6 is a front view of a third outer circumferential surface part or a fourth outer circumferential surface part on the cutting insert 10.

As illustrated in FIG. 3, the cutting insert 10 is a thick and substantially rectangular body. The cutting insert 10 includes two side surfaces 20 and 21 opposed to each other, a fixing hole 22 passing through the centers of the two side surfaces 20 and 21, and an outer circumferential surface 23 that is disposed between the outer circumferential edges of the two side surfaces 20 and 21 and are connected to the outer circumferential edges of the two side surfaces 20 and 21.

The side 20 is substantially rectangular, and the circular fixing hole 22 is formed at the center of the side 20. At the four corners of the side 20, cutting parts 50 to 53 are located, which will be described later.

The side 20 has first parts 30 that are located near the four corners and second parts 31 that are located near the fixing hole 22 on the first parts 30 so as to surround the fixing hole 22 and protrude higher than the first parts 30. The second part 31 is substantially diamond-shaped and has four outer faces 40 on the outer circumferential edges. The outer faces 40 are vertical surfaces raised substantially perpendicularly (in an axial direction Z of the fixing hole 22) to the second parts 31. Moreover, the outer faces 40 are directed toward the cutting parts 50 to 53, which will be described later, in a direction orthogonal to the axial direction Z of the fixing hole 22. The surfaces of the second parts 31 are, for example, flat surfaces orthogonal to the axial direction Z of the fixing hole 22 and come into contact with a fixing bottom 100 of the tool body 11, which will be described later, when the cutting insert 10 is attached to the tool body 11.

The side 21, the back side of the side 20, has the same configuration as the side 20. Specifically, like the side 20, the side 21 has first parts 30 and second parts 31 with four outer faces 40.

The outer circumferential surface 23 has the four cutting parts 50, 51, 52, and 53 and four outer circumferential surface parts 60, 61, 62, and 63. As illustrated in FIG. 4, the outer circumferential surface 23 is shaped with line symmetry with respect to a center line K1 extended along a width direction Y passing through the center of the cutting insert 10 (a center C1 of the fixing hole 22) in a longitudinal direction X and a center line K2 extended along the longitudinal direction X passing through the center of the cutting insert 10 in the width direction Y (the center C1 of the fixing hole 22).

As illustrated in FIGS. 3 and 4, the outer circumferential surface 23 includes the first cutting part 50, the second cutting part 51, the third cutting part 52, and the fourth cutting part 53 in this order around a center C1 of the fixing hole 22 (clockwise in FIGS. 3 and 4). The first cutting part 50 and the second cutting part 51 are adjacent to each other and the third cutting part 52 and the fourth cutting part 53 are adjacent to each other in the longitudinal direction X; meanwhile, the second cutting part 51 and the third cutting part 52 are adjacent to each other and the first cutting part 50 and the fourth cutting part 53 are adjacent to each other in the width direction Y.

The first cutting part 50 has a cutting face 70-1, a flank 71-1 forming a crossing edge line with the cutting face 70-1, and a lip 72-1 formed on the crossing edge line between the cutting face 70-1 and the flank 71-1. The side surfaces of the first cutting part 50 forming crossing edge lines with the cutting face 70-1 and the flank 71-1 are the first parts 30 of the side surfaces 20 and 21.

The second cutting part 51 has a cutting face 70-2, a flank 71-2, and a lip 72-2 like the first cutting part 50. The lip 72-1 of the first cutting part 50 and the lip 72-2 of the second cutting part 51 are opposed to each other. Specifically, the cutting face 70-1 of the first cutting part 50 and the cutting face 70-2 of the second cutting part 51 are directed in the same direction (substantially in the width direction Y) while the flank 71-1 of the first cutting part 50 and the flank 71-2 of the second cutting part 51 are directed in opposite directions (substantially in the longitudinal direction X).

The third cutting part 52 has a cutting face 70-3, a flank 71-3, and a lip 72-3 like the first cutting part 50. The fourth cutting part 53 has a cutting face 70-4, a flank 71-4, and a lip 72-4 like the first cutting part 50. The lip 72-3 of the third cutting part 52 and the lip 72-4 of the fourth cutting part 53 are opposed to each other. Specifically, the cutting face 70-3 of the third cutting part 52 and the cutting face 70-4 of the fourth cutting part 53 are directed in the same direction (substantially in the width direction Y) while the flank 71-3 of the third cutting part 52 and the flank 71-4 of the fourth cutting part 53 are directed in opposite directions (substantially in the longitudinal direction X).

As illustrated in FIGS. 3 to 5, the first outer circumferential surface part 60 is disposed between the first cutting part 50 and the second cutting part 51 adjacent to each other in the longitudinal direction X, and the second outer circumferential surface part 61 is opposed to the first outer circumferential surface part 60 and is disposed between the third cutting part 52 and the fourth cutting part 53 adjacent to each other in the longitudinal direction X. As illustrated in FIGS. 3, 4, and 6, the third outer circumferential surface part 62 is disposed between the second cutting part 51 and the third cutting part 52 adjacent to each other in the width direction Y, and the fourth outer circumferential surface part 63 is opposed to the third outer circumferential surface part 62 and is disposed between the first cutting part 50 and the fourth cutting part 53 adjacent to each other in the width direction Y.

As illustrated in FIGS. 3 to 5, the first outer circumferential surface part 60 is formed between the cutting face 70-1 of the first cutting part 50 and the cutting face 70-2 of the second cutting part 51. The first outer circumferential surface part 60 has the center recessed near the fixing hole 22 in the longitudinal direction X as illustrated in FIGS. 3 and 4. For example, as illustrated in FIG. 4, the first outer circumferential surface part 60 is substantially V-shaped in a side view of the side 20 viewed from the axial direction Z of the fixing hole 22. The first outer circumferential surface part 60 is configured such that a virtual arc A1 in contact with the first outer circumferential surface part 60 has two contact portions B.

As illustrated in FIGS. 3 to 5, the second outer circumferential surface part 61 is formed between the cutting face 70-3 of the third cutting part 52 and the cutting face 70-4 of the fourth cutting part 53. Like the first outer circumferential surface part 60, the second outer circumferential surface part 61 has the center recessed near the fixing hole 22 in the longitudinal direction X and is substantially V-shaped as illustrated in FIGS. 3 and 4. The second outer circumferential surface part 61 is configured such that a virtual arc A1 in contact with the second outer circumferential surface part 61 has two contact portions B as illustrated in FIG. 4. The virtual arc A1 has the same diameter as a diameter D1 of a circumcircle (a circle passing through the lips of the cutting parts 50 to 53) A2 of the cutting insert 10. The virtual arcs A1 are located in contact with the recessed faces of the first outer circumferential surface part 60 and the second outer circumferential surface part 61. The contact portion B is located between the center and each outer end of the first outer circumferential surface part 60 and the second outer circumferential surface part 61.

The first outer circumferential surface part 60 and the second outer circumferential surface part 61 have an angle of aperture α1 of 130 degrees or greater and 179 degrees or smaller. The angle of aperture α1 is preferably set at 140 degrees or more and 150 degrees or less.

When the virtual arc A1 has the same diameter as the diameter D1 of the circumcircle (the circle passing through the lips of the cutting parts 50 to 53) A2 of the cutting insert 10 and the two virtual arcs A1 are disposed in contact with the first outer circumferential surface part 60 and the second outer circumferential surface part 61, a distance L1 between centers O1 and O2 of the two virtual arcs A1 is 150% or less of the diameter D1 of the circumcircle A2 of the cutting insert 10. The distance L1 is preferably 140% or more and 150% or less of the diameter D1 of the circumcircle A2 and is more preferably 143% or more and 147% or less.

As illustrated in FIGS. 3, 4, and 6, the third outer circumferential surface part 62 is formed between the flank 71-2 of the second cutting part 51 and the flank 71-3 of the third cutting part 52. For example, the third outer circumferential surface part 62 has a central flat face 75 in the width direction Y and tilted faces 76 connected to the flanks 71-2 and 71-3 from both ends of the flat face 75. The fourth outer circumferential surface part 63 is formed between the flank 71-1 of the first cutting part 50 and the flank 71-4 of the fourth cutting part 53. For example, the fourth outer circumferential surface part 63 has a central flat face 75 in the width direction Y and tilted faces 76 connected to the flanks 71-1 and 71-4 from both ends of the flat face 75.

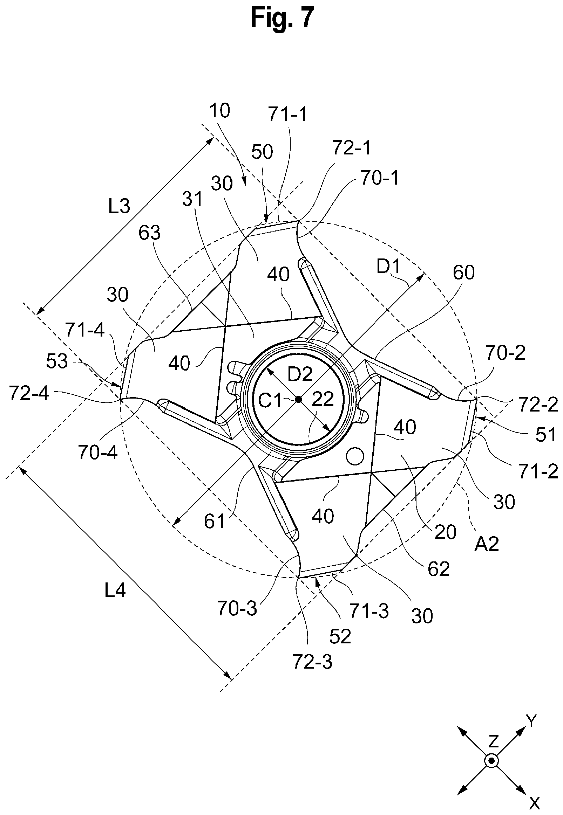

As illustrated in FIG. 7, a length L3 of the cutting insert 10 in a direction (width direction Y) connecting the lip 72-1 of the first cutting part 50 and the lip 72-4 of the fourth cutting part 53 is 70% or more and 75% or less of a length L4 of the cutting insert 10 in a direction (longitudinal direction X) connecting the lip 72-1 of the first cutting part 50 and the lip 72-2 of the second cutting part 51. The length L3 is also a distance between the lip 72-1 of the first cutting part 50 and the lip 72-4 of the fourth cutting part 53.

Moreover, the length L4 of the cutting insert 10 in the longitudinal direction X is 95% or less, preferably 85% or more and 95% or less of the diameter D1 of the circumcircle A2 of the cutting insert 10. The length L3 of the cutting insert 10 in the width direction Y is 70% or less, preferably 65% or more and 70% or less of the diameter D1 of the circumcircle A2 of the cutting insert 10.

A hole diameter D2 of the fixing hole 22 is 30% or less of the diameter D1 of the circumcircle A2 of the cutting insert 10. The hole diameter D2 is preferably 20% or more and 28% or less of the diameter D1 of the circumcircle A2.

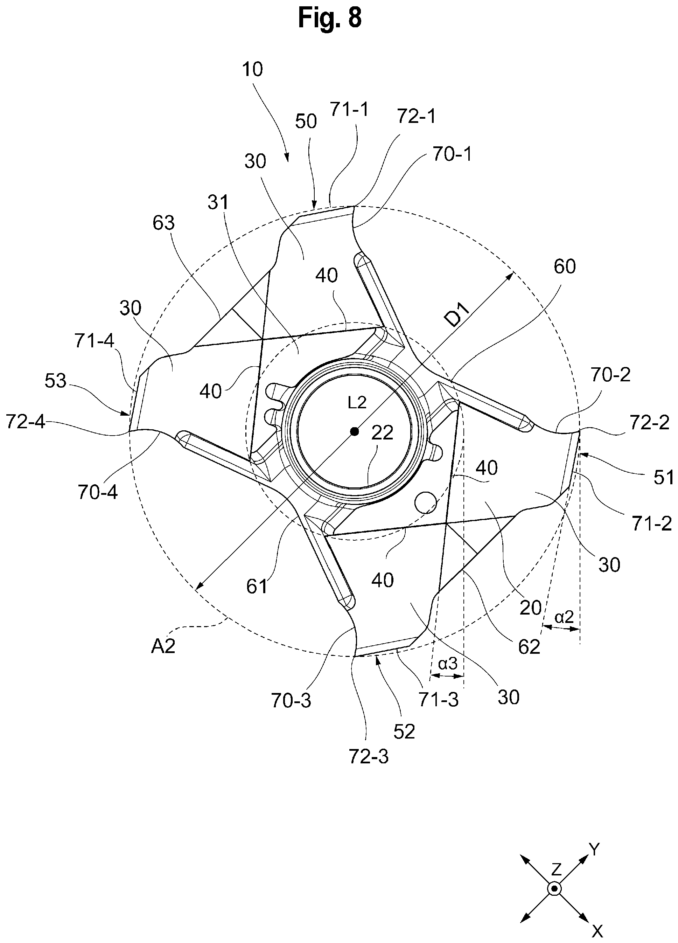

As illustrated in FIG. 8, the flanks 71-1, 71-2, 71-3, and 71-4 of the cutting parts 50 to 53 have a clearance angle α2 of 10 degrees or greater, preferably 10 degrees or greater and 15 degrees or smaller.

When the lips of the cutting parts 50 to 53 cut into a work material, the outer faces 40 of the second parts 31 on the side surfaces 20 and 21 may come into contact with the work material. Thus, the outer face 40 has a second flank. The second flank of the outer face 40 has a clearance angle α3 of 5 degrees or greater. The clearance angle α3 of the second flank is preferably 5 degrees or greater and 10 degrees or smaller.

### Tool Body

As illustrated in FIG. 1, the tool body 11 is substantially shaped like a long cylinder extending in one direction. The distal end part of the tool body 11 has a fixing part 80 to which the cutting insert 10 is fixed.

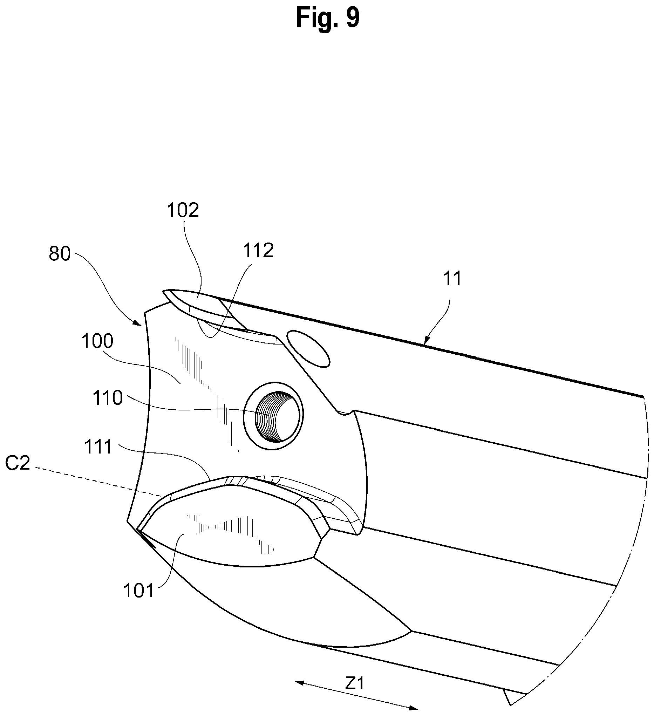

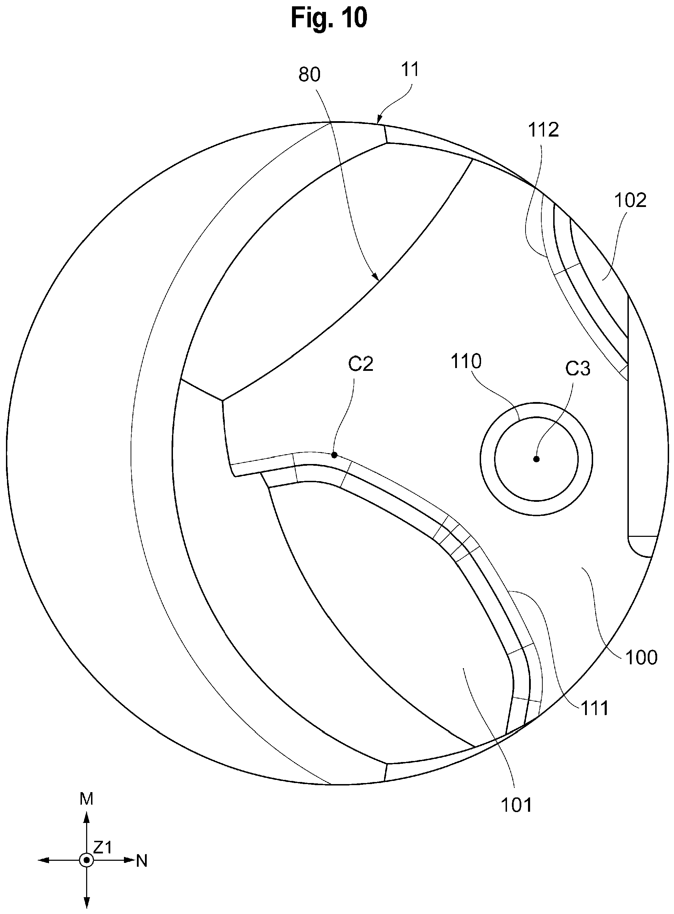

FIG. 9 is a perspective view illustrating the fixing part 80 of the tool body 11 from which the cutting insert 10 has been removed. FIG. 10 is a front view illustrating the fixing part 80 of the tool body 11 from which the cutting insert 10 has been removed, the fixing part 80 being viewed from an axial direction Z1. The tool body 11 is fixed to a cutter in a position illustrated in FIG. 10 when being used. The vertical and horizontal directions in the present specification are set based on the position of the tool body 11 illustrated in FIG. 10.

As illustrated in FIGS. 9 and 10, the fixing part 80 of the tool body 11 includes the fixing bottom 100 that is brought into contact with, for example, the side 20 or the side 21 of the cutting insert 10 and a first holding part 101 and a second holding part 102 that hold the outer circumferential surface 23 of the cutting insert 10.

The fixing bottom 100 is, for example, a flat surface orthogonal to the axial direction Z1 (the direction of a central axis C2) of the tool body 11. On the fixing bottom 100, a screw hole 110 formed for screwing the screw 12 is extended in the axial direction Z1. As illustrated in FIG. 10, in a front view of the tool body 11 from the axial direction Z1, the screw hole 110 has a center C3 that is positioned like the central axis C2 of the tool body 11 (for example, shifted slightly downward) in a vertical direction M and is shifted to the right from the center C2 in a horizontal direction N.

As illustrated in FIGS. 9 and 10, the first holding part 101 and the second holding part 102 protrude from the fixing bottom 100 toward the distal end. As illustrated in FIG. 10, the first holding part 101 is disposed on the lower side of the fixing bottom 100. The first holding part 101 has an arc face 111 near the fixing bottom 100 disposed on the upper side of the first holding part 101, the arc face 111 being raised substantially perpendicularly to the fixing bottom 100. The arc face 111 curves diagonally to the upper right into a convex shape near the fixing bottom 100. The arc face 111 has a longer curving surface than the first outer circumferential surface part 60 or the second outer circumferential surface part 61 of the cutting insert 10.

The second holding part 102 is disposed at the upper side of the fixing bottom 100. The second holding part 102 has an arc face 112 near the fixing bottom 100 disposed on the lower side of the second holding part 102, the arc face 112 being raised substantially perpendicularly to the fixing bottom 100. The arc face 112 curves diagonally to the lower left into a convex shape near the fixing bottom 100. The arc face 112 has a curving surface that is shorter than the arc face 111 of the first holding part 101 and measures about a half length of the first outer circumferential surface part 60 or the second outer circumferential surface part 61 of the cutting insert 10.

### Cutting Tool

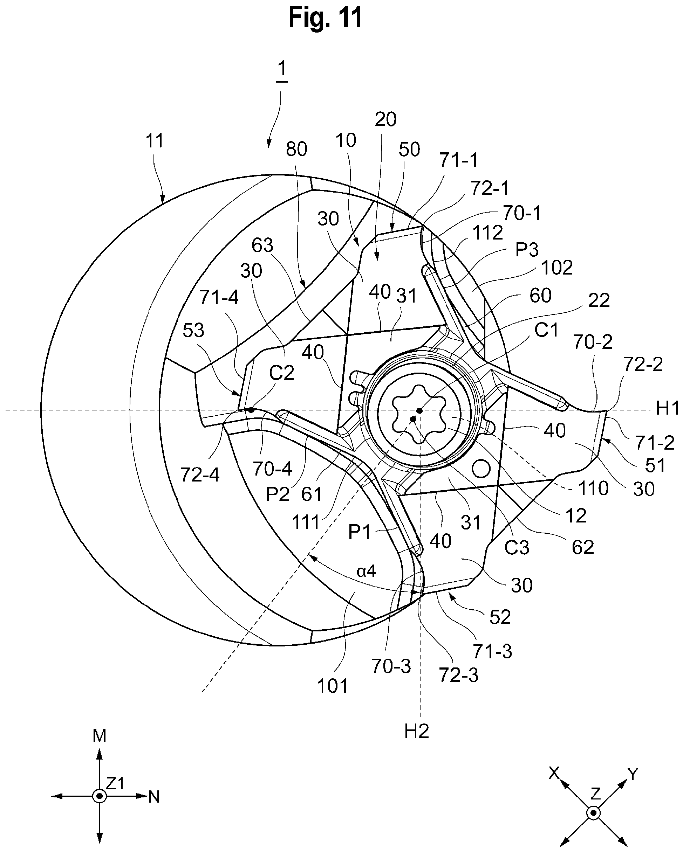

FIG. 11 is a front view of the cutting tool 1 with the cutting insert 10 attached to the tool body 11.

As illustrated in FIGS. 2 and 11, the cutting insert 10 is fixed to the tool body 11 with the screw 12 inserted into the fixing hole 22 and the screw hole 110. In this example, the second cutting part 51 is used for cutting from among the four cutting parts 50 to 53.

For example, the side 21 of the cutting insert 10 is in contact with the fixing bottom 100 of the tool body 11, and the side 20 is exposed to the front. As illustrated in FIG. 11, the second outer circumferential surface part 61 of the cutting insert 10 is in contact with the arc face 111 of the first holding part 101 at two points. At this point, the contact portions of the second outer circumferential surface part 61 are a portion P1 between the third cutting part 52 and the center of the second outer circumferential surface part 61 in the longitudinal direction X and a portion P2 between the fourth cutting part 53 and the center of the second outer circumferential surface part 61 in the longitudinal direction X. A portion around the center of the second outer circumferential surface part 61 in the longitudinal direction X, the cutting face 70-3 of the third cutting part 52, and the cutting face 70-4 of the fourth cutting part 53 are not in contact with the arc face 111.

The first outer circumferential surface part 60 of the cutting insert 10 is in contact with the arc face 112 of the second holding part 102 at a point. At this point, the contact portion of the first outer circumferential surface part 60 is a portion P3 between the first cutting part 50 and the center of the first outer circumferential surface part 60 in the longitudinal direction X. The cutting face 70-1 of the first cutting part 50, a portion around the center of the first outer circumferential surface part 60 in the longitudinal direction X, a portion between the second cutting part 51 and the portion around the center of the first outer circumferential surface part 60, and the cutting face 70-2 of the second cutting part 51 are not in contact with the arc face 112.

As illustrated in FIG. 11, in the front view of the distal end of the cutting tool 1 from the axial direction Z1 of the tool body 11, the screw hole 110 of the tool body 11 has the center C3 slightly shifted from the center C1 of the fixing hole 22 of the cutting insert 10. In other words, the screw 12 is slightly smaller in diameter than the fixing hole 22 and is inserted into the screw hole 110 while being shifted from the center C1 in the fixing hole 22. In a state in which the lip 72-2 of the second cutting part 51 of the cutting insert 10 and the center C1 of the fixing hole 22 are disposed on a horizontal line H1, the center C3 of the screw hole 110 of the tool body 11 is shifted from the center C1 of the fixing hole 22 of the cutting insert 10 in a direction tilted at 0 degrees with respect to a vertically downward direction H2 or at an angle α4 of 45 degrees or less toward the center C2 of the tool body 11. The angle α4 is preferably 40 degrees or greater and 44 degrees or smaller.

As illustrated in FIG. 11, in the front view of the distal end of the cutting tool 1 from the axial direction Z1 of the tool body 11, the cutting insert 10 is fixed such that a virtual straight line H1 connecting the lips 72-2 and 72-4 of the second cutting part 51 and the fourth cutting part 53, which are diagonally opposite to each other, is a horizontal line (a set angle of 0 degree) with respect to the tool body 11.

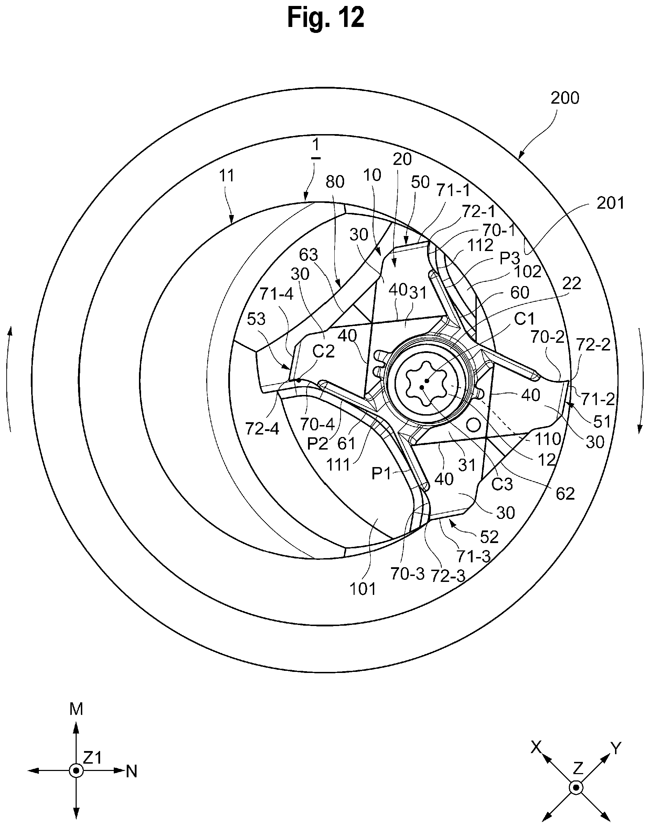

For example, the cutting tool 1 is used during grooving on the inner surface of a work material. At this point, the cutting tool 1 is viewed from the front as illustrated in FIG. 12. A work material 200 rotates clockwise about the rotation axis serving as the central axis, the second cutting part 51 of the cutting tool 1 moves forward to the right in the horizontal direction N with respect to an inner surface 201 of the work material 200, and the inner surface 201 of the work material 200 is grooved by the lip 72-2.

When a cutting part other than the second cutting part 51 of the cutting insert 10 is used during cutting, the cutting insert 10 of FIG. 11 is rotated 180° around the center C1 of the fixing hole 22 to be attached to the tool body 11, so that the fourth cutting part 53 can be used. At this point, the first outer circumferential surface part 60 is held at two points by the first holding part 101 while the second outer circumferential surface part 61 is held at a point by the second holding part 102. Moreover, the cutting insert 10 of FIG. 11 is flipped to have the side 21 at the front, the first outer circumferential surface part 60 is held by the first holding part 101, and the second outer circumferential surface part 61 is held by the second holding part 102, so that the third cutting part 52 can be used. Furthermore, the cutting insert 10 is rotated 180°, so that the first cutting part 50 can be used.

According to the present embodiment, the outer circumferential surface 23 of the cutting insert 10 has the four cutting parts 50 to 53, the first outer circumferential surface part 60, and the second outer circumferential surface part 61, the first outer circumferential surface part 60 and the second outer circumferential surface part 61 each have the center recessed toward the fixing hole 22, and the virtual arc A1 having the same diameter as the diameter D1 of the circumcircle A2 of the cutting insert 10 is in contact with two points on each of the outer circumferential surface parts 60 and 61. This allows the tool body 11 to come into contact with the contact portions B other than the cutting parts 50 to 53 of the cutting insert 10 and hold the cutting insert 10, so that the tool body 11 can sufficiently hold the cutting insert 10 even if one of the cutting parts is broken. The virtual arc A1 having the same diameter as the diameter D1 of the circumcircle A2 of the cutting insert 10 is in contact with two points on each of the first outer circumferential surface part 60 and the second outer circumferential surface part 61, thereby easily securing the thickness of the cutting insert 10 in the width direction Y and the thicknesses of the first holding part 101 and the second holding part 102 of the tool body 11. This can suppress the deformation and breakage of the cutting insert 10 and the tool body 11.

The first outer circumferential surface part 60 and the second outer circumferential surface part 61 are substantially V-shaped in a side view of the side surfaces 20 and 21 from the axial direction Z of the fixing hole 22. This allows the tool body 11 to properly come into contact with the contact portions B other than the cutting parts 50 to 53 of the cutting insert 10 and sufficiently hold the cutting insert 10.

The first outer circumferential surface part 60 and the second outer circumferential surface part 61 have an angle of aperture α1 of 130 degrees or larger and 179 degrees or smaller. This can easily secure the thickness of the cutting insert 10 in the width direction Y and the thicknesses of the first holding part 101 and the second holding part 102 of the tool body 11, thereby suppressing the deformation and breakage of the cutting insert 10 and the tool body 11.

When the two virtual arcs A1 having the same diameter as the diameter D1 of the circumcircle A2 of the cutting insert 10 are disposed in contact with the first outer circumferential surface part 60 and the second outer circumferential surface part 61, respectively, the distance L1 between the centers O1 and O2 of the two virtual arcs A1 is 150% or less of the diameter D1 of the circumcircle A2 of the cutting insert 10. Thus, the angle of aperture α1 for the first outer circumferential surface part 60 and the second outer circumferential surface part 61 increases. This can easily secure the thickness of the cutting insert 10 in the width direction Y and the thicknesses of the first holding part 101 and the second holding part 102 of the tool body 11, thereby suppressing the deformation and breakage of the cutting insert 10 and the tool body 11.

The hole diameter D2 of the fixing hole 22 is 30% or less of the diameter D1 of the circumcircle A2 of the cutting insert 10, thereby securing a thickness around the fixing hole 22 of the cutting insert 10 to obtain the strength of the cutting insert 10.

The length L3 of the cutting insert 10 in the direction (width direction Y) connecting the lip 71-1 of the first cutting part 50 and the lip 74-4 of the fourth cutting part 53 is 70% or less of the diameter D1 of the circumcircle A2 of the cutting insert 10. The length L4 of the cutting insert 10 in the direction (longitudinal direction X) connecting the lip 71-1 of the first cutting part 50 and the lip 71-2 of the second cutting part 51 is 95% or less of the diameter of the circumcircle of the cutting insert. This obtains a proper length between the lips of the cutting insert 10, thereby securing a sufficient surface in contact with the tool body 11.

The cutting parts 50 to 53 have the clearance angle α2 of 10 degrees or greater, enabling machining on a work material having a small diameter.

The second parts 31 of the side surfaces 20 and 21 have the outer faces 40 forming the second flank, and the clearance angle α3 of the second flank is 5 degrees or greater. In this case, the second flank of the outer face 40 has a sufficiently large clearance angle, thereby suppressing the contact of the outer face 40 with a work material when the cutting parts 50 to 53 more deeply perform grooving. This enables deeper grooving by the cutting parts 50 to 53.

In the cutting tool 1, the tool body 11 includes the first holding part 101 that comes into contact with two points on one of the first outer circumferential surface part 60 and the second outer circumferential surface part 61 and the second holding part 102 that comes into contact with a point on the other of the first outer circumferential surface part 60 and the second outer circumferential surface part 61. Thus, the tool body 11 properly holds the cutting insert 10 at three points other than the cutting parts 50 to 53; meanwhile, even if one of the cutting parts 50 to 53 is broken, the tool body 11 can sufficiently hold the cutting insert 10.

The first holding part 101 has the arc face 111 protruding toward the second holding part 102, and the second holding part 102 has the arc face 112 protruding toward the first holding part 101. Thus, the tool body 11 can properly hold the cutting insert 10 at three points other than the cutting parts 50 to 53.

As illustrated in FIG. 11, the center C3 of the screw hole 110 of the tool body 11 is shifted from the center C1 of the fixing hole 22 of the cutting insert 10, and the cutting insert 10 can be fixed to the tool body 11 with the screw 12. In a state in which the lip 72-2 of the cutting part 52 used for the cutting insert 10 and the center C1 of the fixing hole 22 are disposed on the horizontal line H1, the center C3 of the screw hole 110 of the tool body 11 is shifted from the center C1 of the fixing hole 22 of the cutting insert 10 in a direction tilted at 0 degrees with respect to the vertically downward direction H2 or at an angle α4 of 45 degrees or less toward the center C2 of the tool body 11. In this case, the cutting insert 10 can be pressed and fixed to the first holding part 101 with the screw 12. This allows the screw 12 and the first holding part 101 to sufficiently receive the load of a work material in the rotation direction, thereby reducing a load applied to the second holding part 102. Thus, the second holding part 102 can be reduced in thickness, thereby increasing the amount of protrusion (grooving amount) of the used cutting part 52 with respect to the tool body 11.

In a plan view of the distal end of the cutting tool 1 from the axial direction Z1 of the tool body 11, the cutting tool 1 is configured so as to fix the cutting insert 10 to the tool body 11 such that the virtual straight line H1 connecting the lips 72-2 and 72-4 of the two cutting parts 51 and 53, which are diagonally opposite to each other, is a horizontal line. Thus, in the cutting insert 10 including the four cutting parts 50 to 53, the lip of the second cutting part 51 to be used can be protruded to the highest degree from the tool body 11, thereby sufficiently obtaining a grooving amount.

The preferred embodiment of the present invention was described with reference to the accompanying drawings. The present invention is not limited to the example. It will be apparent to those skilled in the art that various changes or modifications can be made within the sprit described in the claims. It will be understood that such changes and modifications naturally belong to the technical scope of the present invention.

For example, the structures of the cutting insert 10 and the tool body 11 are not limited to those of the embodiment. For example, the first outer circumferential surface part 60 and the second outer circumferential surface part 61 of the cutting insert 10 are not always V-shaped. For example, the outer circumferential surface parts may be U-shaped. The present invention may be applied to a rotating cutting tool as well as a turning cutting tool.

### Industrial Applicability

The present invention is useful for providing a cutting insert and a cutting tool such that a tool body can sufficiently hold the cutting insert even if one of cutting parts is broken.

## Claims

1. A cutting insert (10) comprising:
two side surfaces (20, 21) opposed to each other;
a fixing hole passing (22) through a center of each of the two side surfaces; and
an outer circumferential surface (23) that is disposed between outer circumferential edges of the two side surfaces and is connected to the outer circumferential edges of the two side surfaces,
the outer circumferential surface including:
precisely four cutting parts (50, 51, 52, 53), each of the cutting parts (50, 51, 52, 53) having a cutting face (70-1, 70-2, 70-3, 70-4);
a first outer circumferential surface part (60) disposed between the first cutting part (50) and the second cutting part (51) of the four cutting parts, the first and second cutting parts being adjacent to each other; and
a second outer circumferential surface part (61) that is opposed to the first outer circumferential surface part and is disposed between the third cutting part (52) and the fourth cutting part (53) of the four cutting parts, the third and fourth cutting parts being adjacent to each other,
wherein the first outer circumferential surface part (60) is formed between the cutting face (70-1) of the first cutting part (50) and the cutting face (70-2) of the second cutting part (51), the second outer circumferential surface part (61) is formed between the cutting face (70-3) of the third cutting part (52) and the cutting face (70-4) of the fourth cutting part (53),
wherein, in a side surface view in which the side surface is viewed from an axial direction of the fixing hole, the first outer circumferential surface part (60) and the second outer circumferential surface part (61) each have a center recessed toward the fixing hole, and two virtual arcs (A1) each having the same diameter as a diameter of a circumcircle (A2) of the cutting insert are respectively in contact with two points on each of the outer circumferential surface parts;
**characterized in that**
a distance between centers of the two virtual arcs is 150% or less of the diameter of the circumcircle of the cutting insert.

2. The cutting insert according to claim 1, wherein the first outer circumferential surface part and the second outer circumferential surface part are substantially V-shaped in the side view of the side surfaces viewed from the axial direction of the fixing hole.

3. The cutting insert according to claim 1 or 2, wherein the first outer circumferential surface part and the second outer circumferential surface part have an angle of aperture of 130 degrees or larger and 179 degrees or smaller.

4. The cutting insert according to any one of claims 1 to 3, wherein the fixing hole has a hole diameter that is 30% or less of the diameter of the circumcircle of the cutting insert.

5. The cutting insert according to any one of claims 1 to 4, wherein the cutting insert has a length that is 70% or less of the diameter of the circumcircle of the cutting insert in a direction connecting a lip (72-1) of the first cutting part and a lip (72-4) of the fourth cutting part, and
the cutting insert has a length that is 95% or less of the diameter of the circumcircle of the cutting insert in a direction connecting the lip of the first cutting part and a lip of the second cutting part.

6. The cutting insert according to any one of claims 1 to 5, wherein the cutting part has a clearance angle of 10 degrees or greater.

7. The cutting insert according to any one of claims 1 to 6, wherein the side surface has first parts including side surfaces of the four cutting parts and second parts that are located near the fixing hole on the first parts so as to protrude relatively higher than the first parts, and
the second parts have an outer face forming a second flank, the second flank having a clearance angle of 5 degrees or greater.

8. A cutting tool (1) comprising:
the cutting insert (10) according to any one of claims 1 to 7; and
a tool body (11) to which the cutting insert is fixed.

9. The cutting tool according to claim 8, wherein the tool body includes a first holding part (101) that comes into contact with two points on one of the first outer circumferential surface part and the second outer circumferential surface part, and a second holding part (102) that comes into contact with a point on the other of the first outer circumferential surface part and the second outer circumferential surface part.

10. The cutting tool according to claim 9, wherein the first holding part has an arc face (111) protruding toward the second holding part.

11. The cutting tool according to claim 9 or 10, wherein the second holding part has an arc face (112) protruding toward the first holding part.

12. The cutting tool according to any one of claims 8 to 11 which depends on claim 5, wherein the tool body has a screw hole (110),
the cutting insert is fixed to the tool body with a screw (12) inserted into the fixing hole and the screw hole, and
in a plan view of a distal end of the cutting tool from an axial direction of the tool body, a center (C3) of the screw hole of the tool body is shifted from a center (C1) of the fixing hole of the cutting insert in a direction tilted at 0 degree with respect to a vertically downward direction or at an angle of 45 degree or smaller toward a center (C2) of the tool body when the lip (72-2) of the cutting part (51) used for the cutting insert and the center (C1) of the fixing hole are disposed on a horizontal line (H1).

## Patentansprüche

1. Schneideinsatz (10), aufweisend:
zwei Seitenflächen (20, 21), die einander gegenüberliegen;
ein Befestigungsloch (22), das durch die Mitte jeder der beiden Seitenflächen verläuft; und
eine Außenumfangsfläche (23), die zwischen Außenumfangskanten der beiden Seitenflächen angeordnet und mit den Außenumfangskanten der beiden Seitenflächen verbunden ist,
wobei die Außenumfangsfläche aufweist:
genau vier Schneidabschnitte (50, 51, 52, 53), wobei jeder der Schneidabschnitte (50, 51, 52, 53) eine Schneidfläche (70-1, 70-2, 70-3, 70-4) aufweist;
einen ersten Außenumfangsflächenabschnitt (60), der zwischen dem ersten Schneidabschnitt (50) und dem zweiten Schneidabschnitt (51) der vier Schneidabschnitte angeordnet ist, wobei der erste und der zweite Schneidabschnitt benachbart zueinander sind; und
einen zweiten Außenumfangsflächenabschnitt (61), der dem ersten Außenumfangsflächenabschnitt gegenüberliegt und zwischen dem dritten Schneidabschnitt (52) und dem vierten Schneidabschnitt (53) der vier Schneidabschnitte angeordnet ist, wobei der dritte und der vierte Schneidabschnitt benachbart zueinander sind,
wobei der erste Außenumfangsflächenabschnitt (60) zwischen der Schneidfläche (70-1) des ersten Schneidabschnitts (50) und der Schneidfläche (70-2) des zweiten Schneidabschnitts (51) ausgebildet ist und der zweite Außenumfangsflächenabschnitt (61) zwischen der Schneidfläche (70-3) des dritten Schneidabschnitts (52) und der Schneidfläche (70-4) des vierten Schneidabschnitts (53) ausgebildet ist,
wobei in einer Seitenansicht, in der die Seitenfläche aus einer Axialrichtung des Befestigungslochs betrachtet wird, der erste Außenumfangsflächenabschnitt (60) und der zweite Außenumfangsflächenabschnitt (61) jeweils eine in Richtung des Befestigungslochs hin zurückversetzte Mitte aufweisen und zwei virtuelle Kreisbögen (A1), die jeweils denselben Durchmesser wie der Durchmesser eines Umkreises (A2) des Schneideinsatzes aufweisen, jeweils an zwei Punkten mit einem jeweiligen der Außenumfangsflächenabschnitte in Kontakt stehen;
**dadurch gekennzeichnet, dass**
ein Abstand zwischen den Mittelpunkten der beiden virtuellen Kreisbögen höchstens 150 % des Durchmessers des Umkreises des Schneideinsatzes beträgt.

2. Schneideinsatz nach Anspruch 1, wobei der erste Außenumfangsflächenabschnitt und der zweite Außenumfangsflächenabschnitt in der Seitenansicht der Seitenflächen bei Betrachtung aus der Axialrichtung des Befestigungslochs im Wesentlichen V-förmig sind.

3. Schneideinsatz nach Anspruch 1 oder 2, wobei der erste Außenumfangsflächenabschnitt und der zweite Außenumfangsflächenabschnitt einen Öffnungswinkel von 130 Grad oder mehr und 179 Grad oder weniger aufweisen.

4. Schneideinsatz nach einem der Ansprüche 1 bis 3, wobei das Befestigungsloch einen Lochdurchmesser aufweist, der höchstens 30 % des Durchmessers des Umkreises des Schneideinsatzes beträgt.

5. Schneideinsatz nach einem der Ansprüche 1 bis 4, wobei der Schneideinsatz in einer Richtung, die eine Schneide (72-1) des ersten Schneidabschnitts mit einer Schneide (72-4) des vierten Schneidabschnitts verbindet, eine Länge aufweist, die höchstens 70 % des Durchmessers des Umkreises des Schneideinsatzes beträgt, und
der Schneideinsatz in einer Richtung, die die Schneide des ersten Schneidabschnitts mit einer Schneide des zweiten Schneidabschnitts verbindet, eine Länge aufweist, die höchstens 95 % des Durchmessers des Umkreises des Schneideinsatzes beträgt.

6. Schneideinsatz nach einem der Ansprüche 1 bis 5, wobei der Schneidabschnitt einen Freiwinkel von 10 Grad oder mehr aufweist.

7. Schneideinsatz nach einem der Ansprüche 1 bis 6, wobei die Seitenfläche erste Abschnitte, welche Seitenflächen der vier Schneidabschnitte umfassen, und zweite Abschnitte aufweist, die in der Nähe des Befestigungslochs auf den ersten Abschnitten angeordnet sind, sodass sie gegenüber den ersten Abschnitten relativ höher hervorstehen, und
die zweiten Abschnitte eine Außenfläche aufweisen, die eine zweite Freifläche bildet, wobei die zweite Freifläche einen Freiwinkel von 5 Grad oder mehr aufweist.

8. Schneidwerkzeug (1), aufweisend:
den Schneideinsatz (10) nach einem der Ansprüche 1 bis 7; und
einen Werkzeugkörper (11), an dem der Schneideinsatz befestigt ist.

9. Schneidwerkzeug nach Anspruch 8, wobei der Werkzeugkörper einen ersten Halteabschnitt (101), der an zwei Punkten mit einem von dem ersten Außenumfangsflächenabschnitt und dem zweiten Außenumfangsflächenabschnitt in Kontakt steht, und einen zweiten Halteabschnitt (102) aufweist, der an einem Punkt mit dem anderen von dem ersten Außenumfangsflächenabschnitt und dem zweiten Außenumfangsflächenabschnitt in Kontakt steht.

10. Schneidwerkzeug nach Anspruch 9, wobei der erste Halteabschnitt eine Bogenfläche (111) aufweist, die in Richtung des zweiten Halteabschnitts vorsteht.

11. Schneidwerkzeug nach Anspruch 9 oder 10, wobei der zweite Halteabschnitt eine Bogenfläche (112) aufweist, die in Richtung des ersten Halteabschnitts vorsteht.

12. Schneidwerkzeug nach einem der Ansprüche 8 bis 11, soweit auf Anspruch 5 rückbezogen, wobei der Werkzeugkörper ein Schraubenloch (110) aufweist,
der Schneideinsatz mit einer Schraube (12), die in das Befestigungsloch und das Schraubenloch eingeführt ist, an dem Werkzeugkörper befestigt ist, und
in einer Draufsicht auf ein distales Ende des Schneideinsatzes bei Betrachtung aus einer Axialrichtung des Werkzeugkörpers ein Mittelpunkt (C3) des Schraubenlochs des Werkzeugkörpers gegenüber einem Mittelpunkt (C1) des Befestigungslochs des Schneideinsatzes in einer Richtung versetzt ist, die gegenüber einer vertikal nach unten gerichteten Richtung um 0 Grad geneigt ist oder um einen Winkel von höchstens 45 Grad in Richtung eines Mittelpunkts (C2) des Werkzeugkörpers geneigt ist, wenn die Schneide (72-2) des bei dem Schneideinsatz verwendeten Schneidabschnitts (51) und der Mittelpunkt (C1) des Befestigungslochs auf einer horizontalen Linie (H1) angeordnet sind.

## Revendications

1. Plaquette de coupe (10) comprenant :
deux surfaces latérales (20, 21) opposées l'une à l'autre ;
un trou de fixation (22) traversant un centre de chacune des deux surfaces latérales ; et
une surface périphérique extérieure (23) qui est disposée entre des bords périphériques extérieurs des deux surfaces latérales et qui est reliée aux bords périphériques extérieurs des deux surfaces latérales,
la surface périphérique extérieure comprenant :
exactement quatre parties de coupe (50, 51, 52, 53), chacune des parties de coupe (50, 51, 52, 53) présentant une face de coupe (70-1, 70-2, 70-3, 70-4) ;
une première partie de surface périphérique extérieure (60) disposée entre la première partie de coupe (50) et la deuxième partie de coupe (51) parmi les quatre parties de coupe, les première et deuxième parties de coupe étant adjacentes l'une à l'autre ; et
une deuxième partie de surface périphérique extérieure (61) qui est opposée à la première partie de surface périphérique extérieure et qui est disposée entre la troisième partie de coupe (52) et la quatrième partie de coupe (53) parmi les quatre parties de coupe, les troisième et quatrième parties de coupe étant adjacentes l'une à l'autre,
dans laquelle la première partie de surface périphérique extérieure (60) est formée entre la face de coupe (70-1) de la première partie de coupe (50) et la face de coupe (70-2) de la deuxième partie de coupe (51), et la deuxième partie de surface périphérique extérieure (61) est formée entre la face de coupe (70-3) de la troisième partie de coupe (52) et la face de coupe (70-4) de la quatrième partie de coupe (53),
dans laquelle, dans une vue latérale dans laquelle la surface latérale est observée selon une direction axiale du trou de fixation, la première partie de surface périphérique extérieure (60) et la deuxième partie de surface périphérique extérieure (61) présentent chacune un centre en retrait vers le trou de fixation, et deux arcs virtuels (A1), présentant chacun le même diamètre que le diamètre d'un cercle circonscrit (A2) de la plaquette de coupe, sont respectivement en contact avec deux points sur chacune des parties de surface périphérique extérieure ;
**caractérisée en ce que**
une distance entre les centres des deux arcs virtuels est inférieure ou égale à 150 % du diamètre du cercle circonscrit de la plaquette de coupe.

2. Plaquette de coupe selon la revendication 1, dans laquelle la première partie de surface périphérique extérieure et la deuxième partie de surface périphérique extérieure sont sensiblement en forme de V dans la vue latérale des surfaces latérales observées selon la direction axiale du trou de fixation.

3. Plaquette de coupe selon la revendication 1 ou 2, dans laquelle la première partie de surface périphérique extérieure et la deuxième partie de surface périphérique extérieure présentent un angle d'ouverture supérieur ou égal à 130 degrés et inférieur ou égal à 179 degrés.

4. Plaquette de coupe selon l'une quelconque des revendications 1 à 3, dans laquelle le trou de fixation présente un diamètre de trou inférieur ou égal à 30 % du diamètre du cercle circonscrit de la plaquette de coupe.

5. Plaquette de coupe selon l'une quelconque des revendications 1 à 4, dans laquelle la plaquette de coupe présente une longueur inférieure ou égale à 70 % du diamètre du cercle circonscrit de la plaquette de coupe dans une direction reliant une arête de coupe (72-1) de la première partie de coupe et une arête de coupe (72-4) de la quatrième partie de coupe, et
la plaquette de coupe présente une longueur inférieure ou égale à 95 % du diamètre du cercle circonscrit de la plaquette de coupe dans une direction reliant l'arête de coupe de la première partie de coupe et une arête de coupe de la deuxième partie de coupe.

6. Plaquette de coupe selon l'une quelconque des revendications 1 à 5, dans laquelle la partie de coupe présente un angle de dépouille supérieur ou égal à 10 degrés.

7. Plaquette de coupe selon l'une quelconque des revendications 1 à 6, dans laquelle la surface latérale présente des premières parties comprenant des surfaces latérales des quatre parties de coupe et des deuxièmes parties qui sont situées à proximité du trou de fixation sur les premières parties de manière à faire saillie relativement plus haut que les premières parties, et
les deuxièmes parties présentent une face extérieure formant une deuxième face de dépouille, la deuxième face de dépouille présentant un angle de dépouille supérieur ou égal à 5 degrés.

8. Outil de coupe (1) comprenant :
la plaquette de coupe (10) selon l'une quelconque des revendications 1 à 7 ; et
un corps d'outil (11) auquel la plaquette de coupe est fixée.

9. Outil de coupe selon la revendication 8, dans lequel le corps d'outil comprend une première partie de maintien (101) qui vient en contact avec deux points de l'une parmi la première partie de surface périphérique extérieure et la deuxième partie de surface périphérique extérieure, et une deuxième partie de maintien (102) qui vient en contact avec un point de l'autre parmi la première partie de surface périphérique extérieure et la deuxième partie de surface périphérique extérieure.

10. Outil de coupe selon la revendication 9, dans lequel la première partie de maintien présente une surface arquée (111) faisant saillie vers la deuxième partie de maintien.

11. Outil de coupe selon la revendication 9 ou 10, dans lequel la deuxième partie de maintien présente une surface arquée (112) faisant saillie vers la première partie de maintien.

12. Outil de coupe selon l'une quelconque des revendications 8 à 11, lorsqu'elle dépend de la revendication 5, dans lequel le corps d'outil présente un trou de vis (110),
la plaquette de coupe est fixée au corps d'outil au moyen d'une vis (12) insérée dans le trou de fixation et le trou de vis, et
dans une vue en plan d'une extrémité distale de l'outil de coupe selon une direction axiale du corps d'outil, un centre (C3) du trou de vis du corps d'outil est décalé par rapport à un centre (C1) du trou de fixation de la plaquette de coupe dans une direction inclinée de 0 degré par rapport à une direction verticale vers le bas, ou d'un angle inférieur ou égal à 45 degrés vers un centre (C2) du corps d'outil, lorsque l'arête de coupe (72-2) de la partie de coupe (51) utilisée pour la plaquette de coupe et le centre (C1) du trou de fixation sont disposés sur une ligne horizontale (H1).
